# EUROPÄISCHE PATENTSCHRIFT

(11) **EP 2 875 272 B1**
(45) Veröffentlichungstag und Bekanntmachung des Hinweises auf die Patenterteilung: **19.12.2018**
(21) Anmeldenummer: 13732463.8
(22) Anmeldetag: 26.06.2013
(51) Int. Cl.: F16L 13/14

(54) **PRESSFITTING SOWIE ANORDNUNG UMFASSEND EINEN PRESSFITTING**
PRESS FITTING AND ARRANGEMENT COMPRISING A PRESS FITTING
EMMANCHEMENT À FORCE ET DISPOSITIF COMPRENANT UN EMMANCHEMENT À FORCE

(30) Priorität: 19.07.2012 DE 202012102715 U; 08.08.2012 DE 202012102984 U
(43) Veröffentlichungstag der Anmeldung: 27.05.2015
(73) Patentinhaber: Uponor Innovation AB, 73061 Virsbo (SE)
(72) Erfinder: KERN-EMMERICH, Thomas, 97464 Niederwerrn (DE)
(74) Vertreter: Epping - Hermann - Fischer
(86) Internationale Anmeldenummer: PCT/EP2013/063412
(87) Internationale Veröffentlichungsnummer: WO 2014/012757

(56) Entgegenhaltungen:
- EP-A1- 1 653 142
- DE-A1- 19 748 623
- DE-A1-102006 030 777
- DE-U1-202005 009 453
- DE-U1-202006 019 578
- DE-U1-202007 001 436

## Beschreibung

Die Erfindung betrifft eine Anordnung umfassend ein Presswerkzeug mit Pressbacken, welche innenliegend Rippen aufweisen, die eine Presshülse radial umschließen können und einen Pressfitting mit wenigstens einem Anschlussstutzen zum Aufstecken eines Rohres, wobei der Anschlussstutzen eine umlaufende Nut mit einem darin aufgenommen O-Ring aufweist, der Außendurchmesser D - 2Δ des O-Ringes geringer ausgebildet ist, wie der größte Außendurchmesser D - Δ des Anschlussstutzens, und somit im nicht verpressten Zustand keine Dichtigkeit zwischen dem O-Ring dem aufzusteckenden Rohr erzielbar ist,
wobei der Anschlussstutzen ausgebildet ist, um mit dem Presswerkzeug mit mehreren in Längsrichtung des Anschlussstutzens beabstandeten Rippen verpresst zu werden.

Derartige Anordnungen sind aus der DE 202 21 504 U1, der EP 1 653 142 A1, der DE 20 2007 001 436 U1, der DE 20 2005 009 453 U1, der DE 10 2006 030 777 A1, der DE 20 2006 019 578 U1 und der DE 197 48 623 A1 bekannt, wobei nach dem Verpressen der O-Ring die Dichtigkeit zwischen Anschlussstutzen und darauf aufgestecktem Rohr erzielt.

Bei Pressfittingen soll stets vermieden werden, dass nicht versehentlich das Verpressen vergessen wird. Dies könnte zu drastischen Folgen führen, zum Beispiel wenn der Pressfitting nicht mehr zugänglich ist oder in einer Wand integriert ist.

Durch die Ausbildung des Anschlussstutzens mit einem größeren Außendurchmesser wie der Außendurchmesser des O-Ringes wird erzielt, dass das aufgesteckte Rohr auf diesem größten Außendurchmesser des Anschlussstutzens aufliegt und keine Dichtigkeit zwischen dem Außendurchmesser des O-Ringes und dem Innendurchmesser des aufgesteckten Rohres erzielt wird.

Da das relativ steife Rohr auf dem starren Anschlussstutzen aufliegt, wird in dieser Kontaktfläche keine Dichtigkeit vor Verpressen erzielt.

Des Weiteren wird das Aufstecken des Rohres auf den Anschlussstutzen wesentlich erleichtert, da keinerlei Reibungskräfte zwischen dem aufgenommenen O-Ring und der Innenwandung des aufzusteckenden Rohres überwunden werden müssen. Das aufzusteckende Rohr muss lediglich über den Anschlussstutzen geschoben werden, wobei zwischen dem Anschlussstutzen und dem Rohr immer eine geringe Spielpassung vorliegt, sodass das Aufstecken des Rohres auf den Anschlussstutzen nahezu ohne Kraftaufwand erfolgen kann.

Um einen derartigen Pressfitting zuverlässig zu verpressen, ist ein Presswerkzeug mit mehreren in Längsrichtung des Anschlussstutzens beabstandeten Rippen notwendig. Die Anzahl der Rippen des Presswerkzeugs steigert die notwendige Presskraft.

Aufgabe der Erfindung ist daher eine Lösung aufzuzeigen, durch welche die Presskraft bei größerem Rohrdurchmessers gering bleibt, so dass die Presswerkzeuge für kleinere Rohrdurchmesser verwendet werden können.

Die Aufgabe wird gemäß Anspruch 1 erfindungsgemäß durch eine Anordnung gelöst. Die Anordnung weist einen Pressfitting mit wenigstens einem Anschlussstutzen zum Aufstecken eines Rohres auf. Weiter sind Kunststoffteile und eine Presshülse vorgesehen, die gegenüberliegend einer Öffnung des Anschlussstutzens über die Kunststoffteile am Anschlussstutzen festgelegt ist. Weiter ist ein Presswerkzeug mit Pressbacken vorgesehen, welche innenliegend mehrere Rippen aufweisen, die die Presshülse radial umschließen können. Der Anschlussstutzen weist eine umlaufende Nut mit einem darin aufgenommen O-Ring auf. Der Außendurchmesser D - 2Δ des O-Ringes ist geringer ausgebildet wie der größte Außendurchmesser D - Δ des Teils des Anschlussstutzens, auf den das Rohr aufsteckbar ist, so dass im nicht-verpressten Zustand keine Dichtigkeit zwischen dem O-Ring und dem aufzusteckenden Rohr erzielbar ist. Das Presswerkzeug derart ausgebildet ist, dass eine mittlere Rippe des Presswerkzeugs beim Verpressen fluchtend gegenüber dem O-Ring positioniert ist. Weiterhin sind im Bereich der anderen Rippen umlaufende Verdrängungsräume am Anschlussstutzen ausgebildet, welche in der Nähe der Öffnung des Anschlussstutzens und in der Nähe eines gegenüberliegenden Endes des Anschlussstutzens angeordnet sind. Beim Verpressen sind die anderen Rippen jeweils fluchtend gegenüber einem Verdrängungsraum angeordnet. Die Verdrängungsräume sind ausgebildet, beim Verpressen teilweise das durch die anderen Rippen verdrängte Material des Rohres aufzunehmen.

Durch die Ausbildung der Verdrängungsräume am Anschlussstutzen im Bereich der Rippen zum Verpressen wird erzielt, dass die Presskraft drastisch reduziert wird und somit auch für große Durchmesser ein Presswerkzeug mit einer Presskraft für kleinere Durchmesser verwendet werden kann.

Im vorliegenden Beispiel kann zum Beispiel ein Presswerkzeug, welches dafür ausgelegt ist, einen Durchmesser einer Presshülse von 75 mm verwendet zu werden, auch dazu verwendet werden, Presshülsen mit 90 oder 110 mm Durchmesser zu verpressen. Die Presskraft liegt auch bei einem Durchmesser von 90 oder 110 mm der Presshülse unter 30 KN, vorzugweise zwischen 26 und 28 KN.

Erfindungsgemäß sind die Verdrängungsräume in der Nähe der Öffnung des Anschlussstutzens und in der Nähe des gegenüberliegenden Endes des Anschlussstutzens angeordnet.

Eine bevorzugte Ausführungsform sieht vor, dass neben der Nut mit dem aufgenommenen O-Ring eine weitere Nut mit einem weiteren aufgenommenen O-Ring ausgebildet ist und auch der Außendurchmesser des weiteren O-Ringes geringer ist als der größte Außendurchmesser des Anschlussstutzens.

Der weitere O-Ring erzielt eine so genannte Redundanz beim Verpressen und eine zusätzliche Sicherheit.

Die weitere Nut beziehungsweise der weitere aufgenommene O-Ring sind vorzugsweise identisch mit der ersten Nut und dem darin aufgenommenen O-Ring dimensioniert.

Gemäß einer weiteren bevorzugten Ausführungsform ist die Breite des Verdrängungsraumes, der der Öffnung des Anschlussstutzens gegenüberliegt, so dimensioniert, dass bei einer Positionierung der Rippe des Presswerkzeuges für das Pressen auf den O-Ring auf dem weiteren O-Ring, die Rippe gegenüberliegend der Öffnung des Anschlussstutzens noch immer im Bereich des zugeordneten Verdrängungsraumes positioniert ist.

Diese Ausführungsform bewirkt, dass bei einem so genannten Verpressen mit falscher Positionierung immer noch eine absolut zuverlässige Dichtigkeit gewährleistet ist. Eine falsche Positionierung des Presswerkzeuges würde zum Beispiel dann vorliegen, wenn die an der Öffnung des Anschlussstutzens angeordnete Rippe nicht auf der Presshülse, sondern daneben angeordnet ist und der Nutzer somit nicht den richtigen Anschlag gegenüberliegend der Öffnung des Anschlussstutzens, sondern den Anschlag der Rippe an der Außenkante der Presshülse verwendet. Auch bei dieser falschen Positionierung würde die Rippe für das Pressen auf den O-Ring auf den weiteren O-Ring einwirken und die weitere Rippe wäre immer noch gegenüberliegend des weiteren Verdrängungsraumes angeordnet, sodass auch in diesem Fall eine zuverlässige Verpressung mit geringer Presskraft gewährleistet ist und durch den weiteren O-Ring auch die entsprechende Dichtigkeit erzielt wird.

Der Anschlussstutzen ist vorzugsweise aus Messing und die Presshülse vorzugsweise aus Stahlblech gebildet.

Die Anordnung kann günstigerweise auch das aufgesteckte Rohr umfassen, wobei als Rohr vorzugsweise ein Kunststoffmetallverbundrohr aufgesteckt ist.

Bei der Ausbildung des Rohres eines Kunststoffmetallverbundrohr weist dieses vorzugsweise eine Innenlage aus Kunststoff, eine Zwischenlage aus Metall und eine weitere Außenlage aus Kunststoff auf.

Des Weiteren umfasst die Anordnung vorzugsweise auch ein Presswerkzeug mit Pressbacken, welche innenliegend mehrere Rippen, die die Presshülse radial umschließen können, aufweist.

Zum Verpressen einer Presshülse mit einem Durchmesser von zirka 90 oder 110 mm werden bei einer oben beschriebenen Anordnung weniger wie 30 KN, vorzugsweise 26 bis 28 KN, Presskraft des Presswerkzeuges benötigt.

Hierzu ist es möglich, zum Verpressen von Presshülsen mit einem Durchmesser von 90 oder 110 mm ein Presswerkzeug zu verwenden, welches normalerweise nur für einen maximalen Durchmesser der Presshülse von 75 mm eingesetzt werden kann.

Nachfolgend wird die Erfindung anhand eines in den Figuren dargestellten Ausführungsbeispieles näher erläutert.

In den Figuren zeigen:
- Figur 1: eine Seitenansicht des Anschlussstutzens mit einer Schnittansicht des aufgesteckten Rohres,
- Figur 2: den Anschlussstutzen aus Figur 1 mit aufgesteckter Presshülse in der unteren Symmetrieachse in Seitenansicht und in der oberen Symmetriehälfte in Schnittansicht,
- Figur 3: eine Schrägansicht eines Backens des Presswerkzeuges,
- Figur 4: die Ansicht gemäß Figur 2 mit aufgesetztem Backen des Presswerkzeuges,
- Figur 5: die Ansicht gemäß Figur 2 mit aufgesetztem Backen des Presswerkzeuges in Falschposition und
- Figur 6: ein Querschnitt des Anschlussstutzens mit aufgestecktem Rohr und Presshülse nach dem Verpressen.

Nachfolgend werden in den Figuren Elemente mit gleicher Funktion und Konstruktion mit den gleichen Bezugszeichen versehen und nicht getrennt gesondert erläutert.

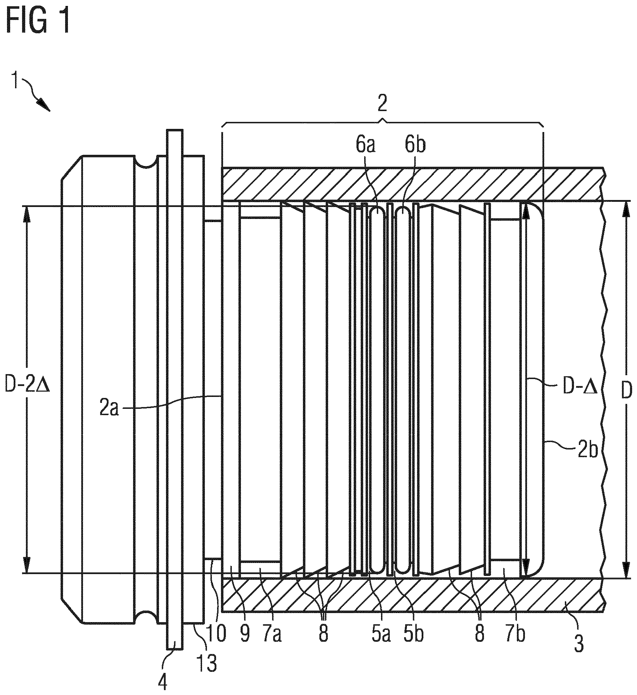

Figur 1 zeigt in Seitenansicht einen Pressfitting 1 mit einem Anschlussstutzen 2, auf welchem ein Rohr 3 aufgesteckt ist. Der Anschlussstutzen 2 weist eine Öffnung 2b zu der Seite hin, von welcher das Rohr 3 auf den Anschlussstutzen 2 gesteckt wird. Am anderen Ende 2a des Anschlussstutzens 2 ist ein Absatz 13 und ein umlaufender Bund 4 vorgesehen, wobei der Absatz 13 als Auflage und der Bund 4 als Anschlag für die aufzunehmende Presshülse dient. Der Absatz 13 sowie der Bund 4 sind nicht Teile des Anschlussstutzens 2, auf welchen das Rohr 3 gesteckt wird.

Gegenüberliegend von dem Bund 4 kann ein weiterer Anschlussstutzen wie auf der rechten Seite, ein Winkelstück oder ein T-Stück ausgebildet sein. Die nachfolgenden Figuren beschränken sich auf die Erläuterung des Anschlussstutzens 2 rechts vom Bund 4.

Der Anschlussstutzen 2 weist in etwa mittig eine umlaufende Nut 5a sowie eine weitere umlaufende Nut 5b auf, in welcher jeweils ein O-Ring 6a und 6b aufgenommen ist. Das auf den Anschlussstutzen 2 aufgeschobene Rohr 3 weist einen Innendurchmesser von D auf. Der Anschlussstutzen weist an den Stellen mit dem maximalen Außendurchmesser einen Außendurchmesser von D - Δ auf, sodass das Rohr 3 mit einer Spielpassung auf den Anschlussstutzen aufgeschoben werden kann. Die aufgenommenen O-Ringe 6a und 6b weisen einen Außendurchmesser von D - 2Δ auf, sodass ein Spalt von 2Δ zwischen dem Außendurchmesser der aufgenommenen O-Ringe 6a und 6b und dem Innendruchmesser des aufgeschobenen Rohres 3 entsteht.

Durch diesen Spalt von 2Δ zwischen den Außenumfängen der aufgenommenen O-Ringe 6a und 6b und dem Innendurchmesser D des aufgeschobenen Rohres ist gewährleistet, dass keine Dichtigkeit zwischen den O-Ringen 6a und 6b und dem aufgeschobenen Rohr 3 vor dem Verpressen erzielt wird. Dies ist insbesondere wichtig bei einem Test durch Beaufschlagung des Rohleitungssystems mit Flüssigkeit oder Wasser unter Druck, um zu erkennen, ob alle Verbindungen richtig verpresst sind oder nicht. Nur bei einer zuverlässigen Undichtigkeit vor Verpressen können nicht verpresste Stellen erkannt werden.

Zwischen dem aufgeschobenen Rohr und dem maximalen Außendurchmesser des Anschlussstutzens besteht eine Spielpassung in der Größe von Δ, sodass auch hier eine Undichtigkeit gewährleistet ist. Die Spielpassung Δ ist in der nachfolgenden Tabelle (alle Angaben in mm) für Rohre mit einem Außendurchmesser vom 63 mm bis 110 mm angegeben.

| Rohr-Außen-ø | Wandstärke | von Rohr-Innen-ø (D) | bis Rohr-Innen-ø (D) | Anschlussstutzen Außen-0 (D-Δ) | Δ min | Δ max |
|---|---|---|---|---|---|---|
| 63 | 6,0 | 51,0 | 51,4 | 50,85 ±0,07 | **0,040** | **0,310** |
| 75 | 7,5 | 60,0 | 60,6 | 59,85 ±0,07 | **0,040** | **0,410** |
| 90 | 8,5 | 72,3 | 72,9 | 72,15 ±0,07 | **0,040** | **0,410** |
| 110 | 10,0 | 89,3 | 89,9 | 89,15 ±0,07 | **0,040** | **0,410** |

Unter Berücksichtigung aller Toleranzen der Rohre 3 und des Anschlussstutzens 2 liegt die Größe Δ bei einem Außendurchmesser des Rohres von 63 mm bis 110 mm und einem Innendurchmesser des Rohres von D = 51 mm - 89,9 mm typischerweise im Bereich von 0,04 mm - 0,41 mm. Eine Spielpassung Δ im Bereich von 0,01 mm - 0,5 mm gewährleist den erfindungsgemäßen Erfolg ebenso für die oben angegebenen Durchmesser.

Der Anschlussstutzen weist des Weiteren einen Verdrängungsraum 7a sowie einen weiteren Verdrängungsraum 7b in der Nähe der Öffnung 2b des Anschlussstutzens 2 auf. Der Verdrängungsraum 7a ist gegenüberliegend der Öffnung 2b des Anschlussstutzens 2, das heißt in der Nähe vom Bund 4, vorgesehen. Die Verdrängungsräume 7a, 7b sind so angeordnet, dass beim Verpressen mit einem Presswerkzeug mit drei innenliegenden Rippen die mittlere Rippe überhalb dem O-Ring 6a und die außenliegenden Rippen überhalb der Verdrängungsräume 7a und 7b angeordnet sind, um das verdrängte Material darin aufnehmen zu können.

Zwischen dem Verdrängungsraum 7b und der Nut 5b sowie auch zwischen der Nut 5a und dem Verdrängungsraum 7a sind angeschrägte Rippen 8 vorgesehen.

Links vom Verdrängungsraum 7a ist ein umlaufender Wulst 9 sowie eine weitere Nut 10 vorgesehen, wobei der Wulst 9 als weiteres Auflager für das aufgeschobene Rohr 3 und die Nut 10 zur Festlegung einer aufzunehmenden Presshülse dient.

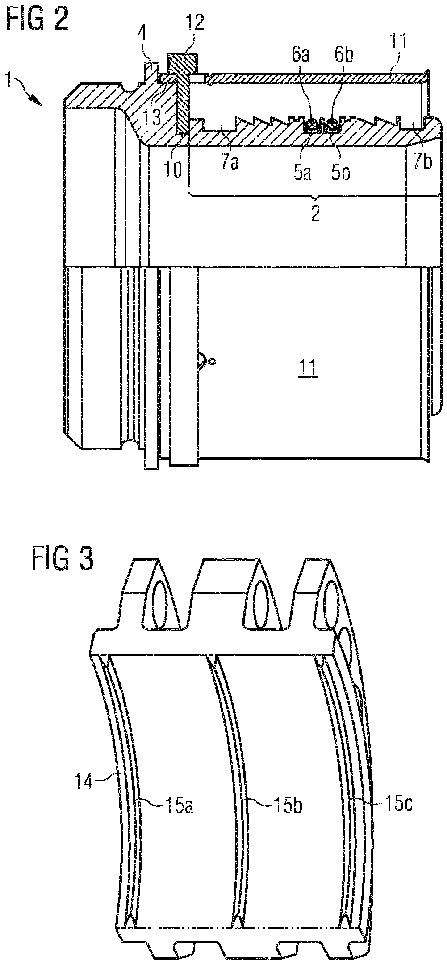

In Figur 2 ist der Pressfitting 1 gemäß Figur 1 mit einer darauf aufgeschobenen Presshülse 11 dargestellt. Die Presshülse 11 ist über drei am Umfang verteilte Kunststoffteile 12 in der Nut 10 festgelegt. Des Weiteren ist neben dem Bund 4 der Absatz 13 vorgesehen, auf welchem die Presshülse 11 aufgeschoben wird, wobei der Bund 4 als Anschlag dient. Beim Aufschieben des Rohres 3 auf den Anschlussstutzen 2 dienen die Kunststoffteile 12 als Anschlag für das aufzuschiebende Rohr 3. Die Kunststoffteile dienen auch als Trennung zwischen Rohr 3 und Anschlussstutzen 2 zur Vermeidung von Kontaktkorrosion.

Figur 3 zeigt in Schrägansicht einen Backen 14 eines Presswerkzeuges zum Verpressen der Presshülse 11. Der Backen 14 weist an seiner Innenseite drei Rippen 15a, 15b und 15c auf, welche axial über die Längsrichtung der Presshülse verteilt sind. Das Presswerkzeug ist so ausgebildet, dass die Backen 14 des Presswerkzeuges nach dem Verpressen die Presshülse radial umschließen.

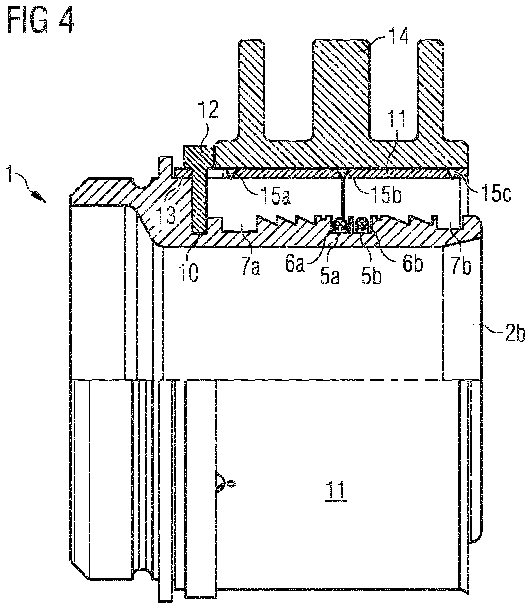

Figur 4 zeigt die Ansicht aus Figur 2 mit einem aufgesetzten Backen 14 mit den Rippen 15a bis 15c.

Die Kunststoffteile 12 dienen mit ihren über den Außenumfang der Presshülse 11 vorspringenden Teilen als seitliche Anschläge für den Backen 14 des Presswerkzeuges. In dieser Position ist die mittlere Rippe 15b fluchtend gegenüber dem O-Ring 6a angeordnet und die Rippe 15a fluchtend gegenüber dem Verdrängungsraum 7a und die Rippe 15c fluchtend gegenüber dem Verdrängungsraum 7b.

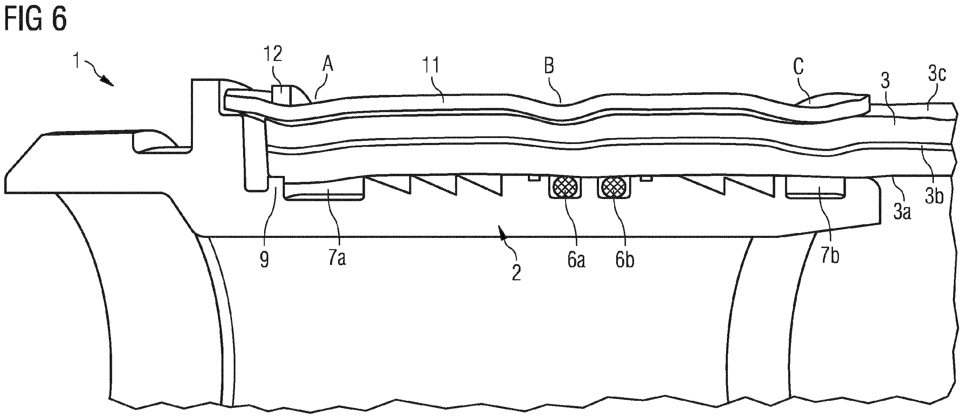

Bei einer Verpressung wie in Figur 6 gezeigt, kann das durch die Rippe 15a verdrängte Material in den Verdrängungsraum 7a und das durch die Rippe 15c verdrängte Material in den Verdrängungsraum 7b gelangen, wodurch eine Verpressung mit einer sehr niedrigen Presskraft erzielbar ist. Diese Konstellation erlaubt es auch für die Durchmesser der Presshülse von 90 oder 110 mm ein Presswerkzeug zu verwenden, welches normalerweise nur für einen Durchmesser von maximal 75 mm der Presshülse verwendet werden kann. Die Presskräfte liegen auch für einen Durchmesser der Presshülse von 90 oder 110 mm bei weniger wie 30 KN (KN = Kilo Newton), in der Regel bei 26 bis 28 KN.

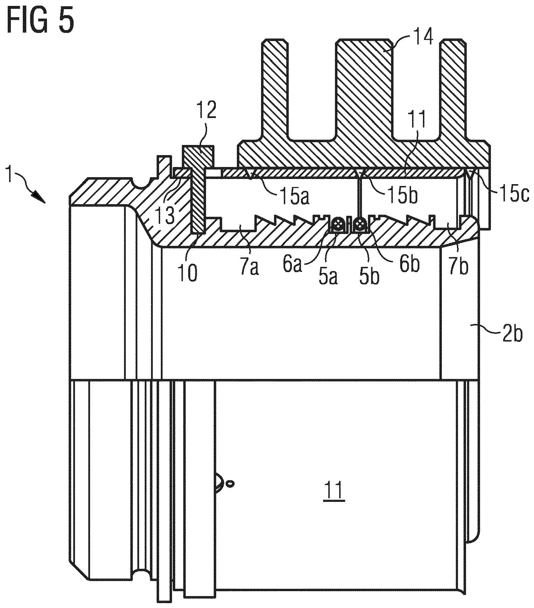

Figur 5 zeigt die Funktion des weiteren O-Ringes 6b. Figur 5 zeigt die Stellung, in der der Backen 14 nicht richtig positioniert ist. Die Kunststoffteile 12 werden nicht als bestimmungsgemäße Anschläge für den Backen 14 verwendet, sondern die Rippe 15c wird an die Außenkante, das heißt an der zu der Öffnung 2b des Anschlussstutzens 2 hin zeigenden Kante angeschlagen. Um auch zu gewährleisten, dass bei dieser Falschposition eine zuverlässige und dichte und sichere Pressung erfolgt, ist in der Nut 5b der O-Ring 6b angeordnet und die Nut 5b sowie der O-Ring 6b so positioniert, dass in dieser Falschposition die Rippe 15b des Backens 14 exakt auf den O-Ring 6b wirkt. Des Weiteren ist der Verdrängungsraum 7a in seiner Länge so dimensioniert, dass auch bei dieser Falschposition die Rippe 15a fluchtend gegenüber dem Verdrängungsraum 7a positioniert ist. Somit ist auch beim Verpressen in der Falschposition gewährleistet, dass eine Dichtigkeit über den O-Ring 6b und die Rippe 15b erzielt wird und auch die Presskraft über die Anordnung der Rippe 15a gegenüberliegend des Verdrängungsraumes 7a niedrig bleibt und nicht höher ist als beim Verpressen in der richtigen Position des Backens 14.

Figur 6 zeigt einen Schnitt durch den Pressfitting 1, einem auf den Anschlussstutzen 2 aufgeschobenem Rohr 3 und der Presshülse 11 in verformtem Zustand. Im gezeigten Ausführungsbeispiel besteht der Pressfitting aus Messing, die Presshülse 11 aus Stahlblech und das aufgeschobene Rohr ist ein Kunststoffverbundrohr mit einer Innenlage 3a aus Kunststoff einer Zwischenlage 3b aus Metall und einer äußeren Lage 3c aus Kunststoff. In diesem Schnittbild ist gut zu sehen, wie an dem Punkt A die Rippe 15a des Backens 14 eingewirkt hat und das Material des Rohres 3 in den Verdrängungsraum 7a bewegt hat. Das Rohr 3 stützt sich zwar an den umlaufenden Wulst 9 radial ab, jedoch wird im Punkt A ein großer Teil in den Verdrängungsraum 7a bewegt.

Im Punkt B ist die Presshülse 11 so verformt, dass das das Rohr 3 exakt auf den O-Ring 6a gepresst ist, womit die zuverlässige Dichtigkeit erzielt wird. Das Rohr 3 liegt nach der Verpressung ebenso auch auf dem weiteren O-Ring 6b auf, wodurch eine gewisse Redundanz erzielt wird. Jedoch wird die höchste Presskraft im Punkt B, das heißt genau fluchtend, auf dem O-Ring 6a erzielt.

Im Punkt C ist das Rohr in den Verdrängungsraum 7b gepresst, wodurch ersichtlich wird, dass bei der Verpressung durch die fluchtenden Verdrängungsräume 7a und 7b Raum geschaffen ist und somit das Rohr 3 nicht komprimiert oder in kleine Räume gedrängt werden muss, sondern in diesen Raum gedrängt werden kann. Durch diese Konstruktion werden hohe Presskräfte vermieden. Dadurch ist die Verwendung von Presswerkzeugen, die normalerweise nur eine Presskraft erzielen, um Presshülsen mit einem Durchmesser von 75 mm zu verpressen, auch für die Verpressung von Pressfittingen mit einem Presshülsendurchmesser von 90 oder 110 mm möglich.

## Patentansprüche

1. Anordnung umfassend
- einen Pressfitting (1) mit wenigstens einem Anschlussstutzen (2) zum Aufstecken eines Rohres (3),
- Kunststoffteile (12),
- eine Presshülse (11), die gegenüberliegend einer Öffnung (2b) des Anschlussstutzens (2) über die Kunststoffteile (12) am Anschlussstutzen (2) festgelegt ist, und
- ein Presswerkzeug mit Pressbacken (14), welche innenliegend mehrere Rippen (15a bis 15c) aufweisen, die die Presshülse (11) radial umschließen können,
wobei
- der Anschlussstutzen (2) eine umlaufende Nut (5a) mit einem darin aufgenommen O-Ring (6a) aufweist,
- der Außendurchmesser D - 2Δ des O-Ringes (6a) geringer ausgebildet ist als der größte Außendurchmesser D - Δ des Teils des Anschlussstutzens (2), auf den das Rohr (3) aufsteckbar ist, so dass im nicht-verpressten Zustand keine Dichtigkeit zwischen dem O-Ring (6a) und dem aufzusteckenden Rohr (3) erzielbar ist,
- der Anschlussstutzen (2) ausgebildet ist, um mit dem Presswerkzeug mit den mehreren in Längsrichtung des Anschlussstutzens (2) beabstandeten Rippen (15a bis 15c) verpresst zu werden,
**dadurch gekennzeichnet, dass** die Anordnung derart ausgebildet ist, dass beim Verpressen eine mittlere Rippe (15b) des Presswerkzeuges fluchtend gegenüber dem O-Ring (6a) positioniert ist, und die anderen Rippen (15a, 15c) jeweils fluchtend gegenüber im Bereich der anderen Rippen (15a, 15c) umlaufend am Anschlussstutzen (2) ausgebildeten Verdrängungsräumen (7a, 7b) angeordnet sind, welche in der Nähe der Öffnung (2b) des Anschlussstutzens (2) und in der Nähe eines gegenüberliegenden Endes (2a) des Anschlussstutzens (2) angeordnet sind, wobei die Verdrängungsräume (7a, 7b) ausgebildet sind, beim Verpressen teilweise das durch die anderen Rippen (15a, 15c) verdrängte Material des Rohres (3) aufzunehmen.

2. Anordnung nach Anspruch 1,
**dadurch gekennzeichnet, dass**
neben der Nut (5a) mit dem aufgenommenen O-Ring (6a) eine weitere Nut (5b) mit einem weiteren darin aufgenommenen O-Ring (6b) ausgebildet ist, und auch der Außendurchmesser D - 2Δ des weiteren O-Ringes (6b) geringer als der größte Außendurchmesser D - Δ des Anschlussstückes (2) ist.

3. Anordnung nach Anspruch 2,
**dadurch gekennzeichnet, dass**
die beiden Nuten (5a und 5b) und die aufgenommenen O-Ringe (6a und 6b) identisch dimensioniert sind.

4. Anordnung nach einem der Ansprüche 2 bis 3,
**dadurch gekennzeichnet, dass**
die Breite des der Öffnung (3) des Anschlussstückes (2) gegenüberliegenden Verdrängungsraumes (7a) so dimensioniert ist, dass bei einer Positionierung der mittleren Rippe (15b) des Presswerkzeuges auf dem weiteren O-Ring (6b) die Rippe (15a) des Presswerkzeuges noch immer im Bereich des zugeordneten Verdrängungsraumes (7a) angeordnet ist.

5. Anordnung nach mindestens einem der Ansprüche 1 bis 4, **dadurch gekennzeichnet, dass**
der Anschlussstutzen (2) aus Messing und die Presshülse (11) aus Stahlblech gebildet sind.

6. Anordnung nach Anspruch 5,
umfassend ein aufgestecktes Rohr (3), wobei das Rohr (3) als Kunststoffmetallverbundrohr mit einem Innendurchmesser von D ausgebildet ist.

7. Anordnung nach Anspruch 6,
**dadurch gekennzeichnet, dass**
das Rohr (3) eine Innenlage aus Kunststoff (3a), eine Zwischenlage aus Metall (3b) und eine Außenlage aus Kunststoff (3c) aufweist.

8. Anordnung nach einem der Ansprüche 1 bis 7,
**dadurch gekennzeichnet, dass**
zum Verpressen einer Presshülse (11) mit einem Durchmesser von zirka 90 oder 110 mm weniger wie 30 KN, vorzugsweise 26 bis 28 KN, Presskraft des Presswerkzeuges erforderlich sind.

## Claims

1. Arrangement, comprising
- a press fitting (1) with at least one connecting piece (2) for mounting a pipe (3),
- plastic parts (12)
- a press sleeve (11), which is secured, opposite an opening (2b) of the connecting piece (2), to the connecting piece (2) via the plastic parts (12), and
- a pressing tool with pressing jaws (14), which internally comprise multiple ribs (15a to 15c), which can radially encompass the press sleeve (11), wherein
- the connecting piece (2) comprises a circumferential groove (5a) with an O-ring (6a) received therein,
- the outer diameter D - 2Δ of the O-ring (6a) is smaller than the largest outer diameter D - Δ of the part of the connecting piece (2), on which the pipe (3) can be mounted, so that in the non-pressed state, no sealing between the O-ring (6a) and the pipe (3) to be mounted can be achieved,
- the connecting piece (2) is configured to be pressed using the pressing tool with the multiple ribs (15a to 15c) spaced in the longitudinal direction of the connecting piece (2),
**characterized in that** the arrangement is formed in such a manner that, during pressing, a middle rib (15b) of the pressing tool is positioned in alignment relative to the O-ring (6a), and the other ribs (15a, 15c) are arranged each in alignment relative to displacement spaces (7a, 7b) formed circumferentially on the connecting piece (2) in the region of the other ribs (15a, 15c), which displacement spaces are arranged in the vicinity of the opening (2b) of the connecting piece (2) and in the vicinity of an opposite end (2a) of the connecting piece (2), wherein the displacement spaces (7a, 7b) are configured, during pressing, to partially accommodate the material of the pipe (3) partially displaced through the other ribs (15a, 15c).

2. Arrangement according to claim 1,
**characterized in that**
next to the groove (5a) with the received O-ring (6a), a further groove (5b) with a further O-ring (6b) received therein is formed, and likewise the outer diameter D - 2Δ of the further O-ring (6b) is smaller than the largest outer diameter D - Δ of the connecting piece (2) .

3. Arrangement according to claim 2,
**characterized in that**
the two grooves (5a and 5b) and the received O-rings (6a and 6b) are identically dimensioned.

4. Arrangement according to one of the claims 2 to 3, **characterized in that**
the width of the displacement space (7a) located opposite the opening (3) of the connecting piece (2) is dimensioned such that, in a positioning of the middle rib (15b) of the pressing tool on the further O-ring (6b), the rib (15a) of the pressing tool is still arranged in the region of the associated displacement space (7a).

5. Arrangement according to at least one of claims 1 to 4, **characterized in that**
the connecting piece (2) is formed out of brass, and the press sleeve (11) out of sheet steel.

6. Arrangement according to claim 5,
including a mounted pipe (3), wherein the pipe (3) is formed as a plastic-metal composite pipe with an inner dimeter of D.

7. Arrangement according to claim 6,
**characterized in that**
the pipe (3) comprises an inner layer of plastic (3a), an intermediate layer of metal (3b), and an outer layer of plastic (3c).

8. Arrangement according to one of claims 1 to 7,
**characterized in that**
for pressing a press sleeve (11) with a diameter of circa 90 or 110 mm, less than 30 KN, preferably 26 to 28 KN of pressing force of the pressing tool are required.

## Revendications

1. Agencement comprenant
- un emmanchement à force (1) avec au moins un raccord (2) servant à emboîter un tube (3),
- des éléments en matière plastique (12),
- un manchon de serrage (11) qui est fixé, opposé à un orifice (2b) du raccord, par l'intermédiaire des éléments en matière plastique (12) sur le raccord (2), et
- un outil de pressage avec des mâchoires de pressage (14), qui présentent à l'intérieur plusieurs nervures (15a à 15c) qui peuvent entourer radialement le manchon de serrage (11),
- le raccord (2) présentant une rainure périphérique (5a) dans laquelle un joint torique (6a) est logé,
- le diamètre extérieur D - 2Δ du joint torique (6a) étant conçu plus petit que le plus grand diamètre extérieur D - Δ de la partie du raccord (2) sur laquelle le tube (3) peut être emboîté, ce qui ne permet pas d'obtenir d'étanchéité à l'état non comprimé entre le joint torique (6a) et le tube à emboîter (3),
- le raccord (2) étant conçu pour être comprimé au moyen de l'outil de pressage avec plusieurs nervures (15a à 15c) distantes du raccord (2) dans la direction longitudinale,
**caractérisé en ce que** l'agencement est conçu de telle sorte que, lors du pressage, une nervure (15b) centrale de l'outil de pressage est positionnée en alignement par rapport au joint torique (6a) et **en ce que** les autres nervures (15a, 15c) sont respectivement disposées en alignement par rapport aux espaces de refoulement (7a, 7b) réalisés sur la périphérie du tube (2) dans la zone des autres nervures (15a, 15c), lesquels sont disposés à proximité de l'orifice (2b) du raccord (2) et à proximité d'une extrémité opposée (2a) du raccord (2), les espaces de refoulement (7a, 7b) étant conçus pour recevoir partiellement le matériau du tube (3) refoulé par les autres nervures (15a, 15c) lors du pressage.

2. Agencement selon la revendication 1, **caractérisé en ce qu'**à côté de la rainure (5a) avec le joint torique (6a) logé, une autre rainure (5b) est prévue avec un joint torique (6b) complémentaire logé à l'intérieur, et également **en ce que** le diamètre extérieur D - 2Δ de l'autre joint torique (6b) est plus petit que le plus grand diamètre extérieur D - Δ du raccord (2).

3. Agencement selon la revendication 2, **caractérisé en ce que** les deux rainures (5a et 5b) et les joints toriques (6a et 6b) logés sont identiquement dimensionnés.

4. Agencement selon l'une quelconque des revendications 2 à 3, **caractérisé en ce que** la largeur de l'espace de refoulement (7a) opposé à l'orifice (2a) du raccord (2) est dimensionnée de telle sorte que la nervure (15a) de l'outil de pressage se trouve encore dans la zone de l'espace de refoulement (7a) assigné lorsque la nervure (15b) centrale de l'outil de pressage est positionnée sur l'autre joint torique (6b).

5. Agencement selon au moins l'une quelconque des revendications 1 à 4, **caractérisé en ce que** le raccord (2) est constitué en laiton et la manchon de serrage (11) est constituée en tôle d'acier.

6. Agencement selon la revendication 5, comprenant un tube (3) emboîté, le tube (3) étant conçu comme tube composite en matière plastique et métal avec un diamètre intérieur de D.

7. Agencement selon la revendication 6, **caractérisé en ce que** le tube (3) comprend une couche intérieure en matière plastique (3a), une couche intermédiaire en métal (3b) et une couche extérieure en matière plastique (3c) .

8. Agencement selon l'une quelconque des revendications 1 à 7, **caractérisé en ce que** pour comprimer une manchon de serrage (11) avec un diamètre d'environ 90 ou 110 mm, une force de pressage de l'outil de pressage de moins de 30 kN, de préférence comprise entre 26 et 28 kN, est nécessaire.
